# EUROPEAN PATENT APPLICATION

(11) **EP 4 697 178 A1**
(43) Date of publication of application: **18.02.2026**
(21) Application number: 25192412.2
(22) Date of filing: 29.07.2025
(51) Int. Cl.: G06F 11/32, G06F 11/3668, G06F 11/3698, G06F 8/34

(54) **GRAPHICALLY MANAGING TESTS FOR DATA PIPELINES**

(30) Priority: 09.08.2024 US 202463681630 P
(71) Applicant: Palantir Technologies Inc., Denver, CO 80202 (US)
(72) Inventor: WANG, Tiffany, Denver, 80202 (US); THOENNES, Drew, Denver, 80202 (US); CAI, Nanwei, Denver, 80202 (US); BAILEY, Alexander, Denver, 80202 (US); RAFIDI, Joseph, Denver, 80202 (US)
(74) Representative: Sayer, Robert David

(57) **Abstract**

A system for enabling testing a target data pipeline within a graphical user interface (GUI) is disclosed. The system is programmed to present a GUI. The GUI shows a data pipeline including data transforms that are related based on data dependencies as a graph. The GUI then accept user inputs to identify a target pipeline from the data pipeline and set up a test for the target pipeline. The user inputs include interacting with the graph and providing test inputs and expected outputs for the target data pipeline, including specifying in each expected output for a test output one or more assertions related to the test output. The GUI further accepts user inputs to execute the test and review test results. The GUI facilitates specifying rich assertions, determining the source of a test failure, and updating the target data pipeline or the test based on the test results.

## Description

### TECHNICAL FIELD

The present disclosure relates to graphical software testing, and more particularly to graphical testing of data pipelines.

### BACKGROUND

In today's distributed computing environment, large amounts of data are being transformed in complex ways. Validating any portion of the data transformation process can be challenging. It can require knowledge of not only that portion but also the process as a whole including global variables. Having to build a test for the specific portion through a particular application programming interface can further add to the challenge. It would be helpful to be able to build tests to validate different portions of the data transformation as efficiently as possible.

### SUMMARY

The appended claims may serve as a summary of the invention.

### BRIEF DESCRIPTION OF THE DRAWINGS:

Example embodiments will now be described by way of non-limiting examples with reference to the accompanying drawings, in which:
FIG. 1 illustrates an example networked computer system in which various embodiments may be practiced;
FIG. 2A illustrates an example graphical user interface (GUI) that allows developing and executing tests for a data pipeline.
FIG. 2B further illustrates an example GUI that allows developing and executing tests for a data pipeline.
FIG. 2C further illustrates an example GUI that allows developing and executing tests for a data pipeline.
FIG. 2D further illustrates an example GUI that allows developing and executing tests for a data pipeline.
FIG. 3 illustrates a process of enabling testing a target data pipeline within a GUI in accordance with disclosed embodiments.
FIG. 4 illustrates an example computer system upon which various embodiments may be implemented.

### DETAILED DESCRIPTION OF CERTAIN EMBODIMENTS

In the following description, for the purposes of explanation, numerous specific details are set forth in order to provide a thorough understanding of the example embodiment(s) of the present invention. It will be apparent, however, that the example embodiment(s) may be practiced without these specific details. In other instances, well-known structures and devices are shown in block diagram form in order to avoid unnecessarily obscuring the example embodiment(s).

### 1. GENERAL OVERVIEW

A system for enabling testing a target data pipeline within a GUI is disclosed. The system is programmed to present a GUI. The GUI shows a data pipeline including data transforms that are related based on data dependencies as a graph. The GUI then accept user inputs to identify a target pipeline from the data pipeline and set up a test for the target pipeline. The user inputs include interacting with the graph and providing test inputs and expected outputs for the target data pipeline, including specifying in each expected output for a test output one or more assertions related to the test output. The GUI further accepts user inputs to execute the test and review test results. The GUI facilitates specifying rich assertions, determining the source of a test failure, and updating the target data pipeline or the test based on the test results.

In some embodiments, a system is programmed to present a GUI. The GUI shows a graph representing a data pipeline including data transforms that are related based on data dependencies as a graph. The graph would include nodes representing the data transforms and edges representing the data dependencies. For example, the data pipeline can include a first data transform that amplifies a given dataset, and a second data transform that produces the union of two given datasets, one being the output of the first data transform. The GUI can manage one screen with several portions, including continuously showing the graph or a part thereof in a first portion for easy reference. In response to a user instruction to set up a test for a target data pipeline selected from the data pipeline, the GUI can show a subgraph representing the target data pipeline in the first portion and automatically insert a node to represent each test input and an expected output for each test output of the target data pipeline. The GUI can show different types of nodes differently for easy distinction.

In some embodiments, the system is programmed to handle any data being transformed through the target data pipeline and thus each test input and expected output as a dataset with one or more rows and columns. The GUI allows the user to provide a test input or expected output via various graphical options, such as looking up or filtering existing datasets or entering values from scratch. For an expected output, any constant value therein corresponds to an equality assertion possibly within a predetermined error range. For example, a value 100 of a cell in an expected output indicates an assertion that the value of the corresponding cell in the corresponding test output equals 100 within an error of plus or minus 2. The value in the expected output can also be any notation that indicates a function of the value in the test output or the metadata of the value. For example, the value in the expected output can directly state a range from -102 to 102, state that the value is not empty, or the value was written before 2pm yesterday. For any assertion that refers to the metadata to apply, the GUI also allows a user to specify any metadata for a test input that is not inherently derivable from the test input and simulate the effect of such metadata in executing the test so as to produce proper metadata for the test output. For example, the GUI can allow a user to specify the receipt timestamp of each test input and make the test inputs available during the test based on these receipt timestamps, to permit meaningful evaluation of an assertion related to creation timestamps of a test output.

In some embodiments, the GUI allows the user to run a test and thus execute the target data pipeline on one or more test inputs to generate one or more test outputs and results of evaluating one or more assertions in the one or more expected outputs. The test succeeds only if all the assertions evaluate to true. The GUI further allows the user to review the test outputs and results to determine why a test has failed. For example, the GUI can show each test output and the corresponding expected output side by side in a second portion of the screen and allow the user to easily find the next cell in the test output associated with an assertion that evaluates to false and determine why. The GUI can also allow the user to quickly update the expected output based on the test output when the test has failed because the expected output needs to be updated instead of the target data pipeline.

The system disclosed herein has several technical benefits. The system allows a user to efficiently identify a target data pipeline for testing, develop and execute the test, and update the target data pipeline or the test, through simple graphical operations and no code within one screen of a GUI to a set of data pipelining operations in the backend. Specifically, the system expedites the evaluation of test failures and the update of test data with various automatic actions or graphical features. Furthermore, the system enables rigorous testing by supporting a full range of assertion evaluations, including those that refer to metadata of the test outputs. In addition, the system allows the tests to be maintained in the same way as the data pipelines within a data management environment that supports versioning and access control. The system further enables automatic, efficient batch execution of relevant tests when a data pipeline is ready to be deployed in the production environment, which increases the quality of the software running in the production environment.

### 2. EXAMPLE COMPUTING ENVIRONMENTS

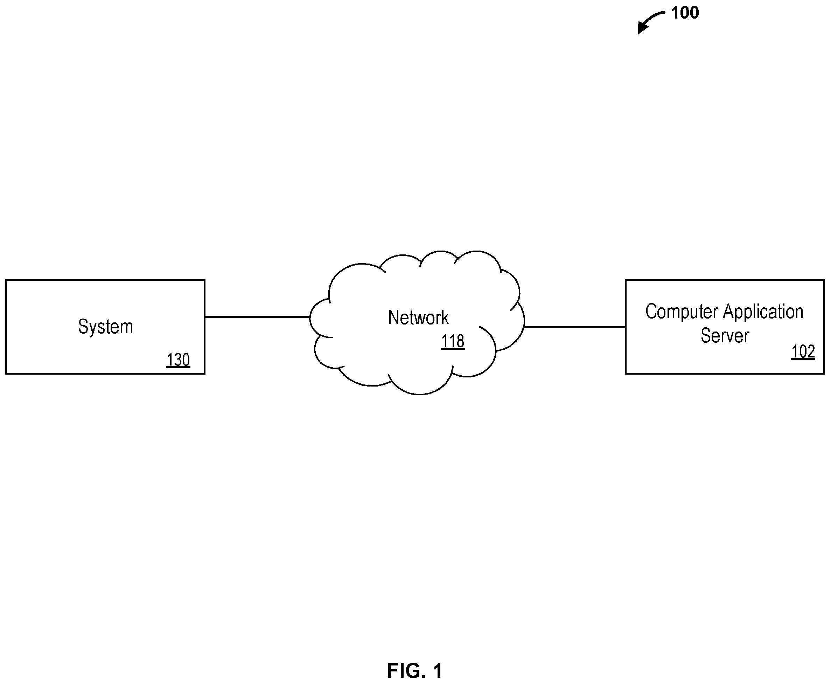

FIG. 1 illustrates an example networked computer system in which various embodiments may be practiced. FIG. 1 is shown in simplified, schematic format for purposes of illustrating a clear example and other embodiments may include more, fewer, or different elements.

In some embodiments, a networked computer system 100 comprises a computer server ("server") 102 and a system 130 or other similar systems, which are communicatively coupled through direct physical connections or via a network 118.

In some embodiments, the server 102 is programmed or configured to manage datasets and data transforms that convert input data to output data. For example, input data can be columns of datasets stored as database tables, a data transform could be a database query that performs a join on a first part of the input data and a selection of a second part of the input data, and the output data can be functions of the selected input data. In managing the datasets and data transforms, the server 102 is further programmed to manage revision and access control for the datasets and data transforms as well data pipelining and provenance tracking as datasets are transformed successively via multiple data transforms. The server 102 is thus further programmed to maintain central repositories that store versions of the datasets and data transforms as well as metadata for the datasets and data transforms related to access control, data pipelining, provenance tracking, or other aspects. In addition, the server 102 is programmed to execute data transforms on datasets directly or via one or more worker devices (not shown) in the distributed environment. The server 102 can comprise any centralized or distributed computing facility with sufficient computing power in data processing, data storage, and network communication for performing the above-mentioned functions.

In some embodiments, the system 130 is programmed to allow a user to develop and execute data pipelines locally and deploy them to the distributed environment through the central repositories. There can be multiple such systems in a distributed environment associated with one or more users. Each data pipeline comprises one or more data transforms and operates on one or more input datasets to generate one or more output datasets, where internally the output dataset of one data transform becomes the input dataset of another data transform. To enable the local processing, the system 130 is programmed to receive/transmit local copies of the data pipelines from/to the central repositories subject to available access control mechanisms, with the local copies contributing to different versions of the data pipelines or constituent data transforms. The system 130 is further programmed to develop and execute tests for the data pipelines. Each test comprises references to target data pipeline, test inputs, and expected outputs or assertions on test outputs, as further discussed below. In executing each test, the system 130 can be programmed to execute any part of the target data pipeline locally or work with the server 102 to execute any part of the target data pipeline. The tests can be transmitted back to the central repositories for reuse by other systems. The data pipelines can be updated in response to test results. The system 130 can comprise a personal computing device, such as s desktop computer, laptop computer, tablet computer, smartphone, or wearable device.

The network 118 may be implemented by any medium or mechanism that provides for the exchange of data between the various elements of FIG. 1. Examples of the network 118 include, without limitation, one or more of a cellular network, communicatively coupled with a data connection to the computing devices over a cellular antenna, a near-field communication (NFC) network, a Local Area Network (LAN), a Wide Area Network (WAN), or the Internet, a terrestrial or satellite link.

In some embodiments, the system 130 is programmed or configured to manage a GUI for developing, executing, and testing data pipelines, including causing the display of a screen of the GUI. The system 130 can be programmed to receive a copy of a specific data pipeline from the server 102 for presentation by the GUI. Alternatively, the GUI can allow the creation of a specific data pipeline from scratch. When the specific data pipeline is newly created or updated, the system 130 can be programmed to transmit a copy back to the server 102. The system 130 can be further programmed to automatically run the tests until they all return successful results before transmitting a copy of the specific data pipeline back to the server 102. The system 130 can be programmed to also transmit copies of the tests to the server 102, in which case the tests can be run by the server 102 before making the specific data pipeline available for use by other systems.

### 3. FUNCTIONAL DESCRIPTIONS

The system 130 is programmed to cause presenting a GUI for building, viewing, and updating a data pipeline, which comprises one or more data transforms and operates on one or more input datasets to generate one or more output datasets. In the GUI, a data transform is represented by a node. A dataset or a corresponding data variable can also be represented by a node. Each node has one or more input pins or output pins that respectively correspond to input data and output data of the underlying data transform. A dataset can be viewed as a passthrough or an identity operation and thus can be represented by a node that has a single input pin and a single output pin corresponding to the same dataset. The flow of data from one data transform to another is represented by an edge that connects two nodes and specifically an output pin of the first node and an input pin of the second node. A data pipeline is therefore represented by a graph of nodes and edges. The GUI allows a user to create or update nodes for data transforms, create or update edges to connect the nodes and form a graph, save the graph, or execute the data pipeline represented by the graph. The graph can contain nodes that represent data variables when the data pipeline is being developed but contain nodes that represent actual datasets instead or in addition when the data pipeline is being executed on actual datasets.

### 3.1. BUILDING TESTS FOR DATA PIPELINES

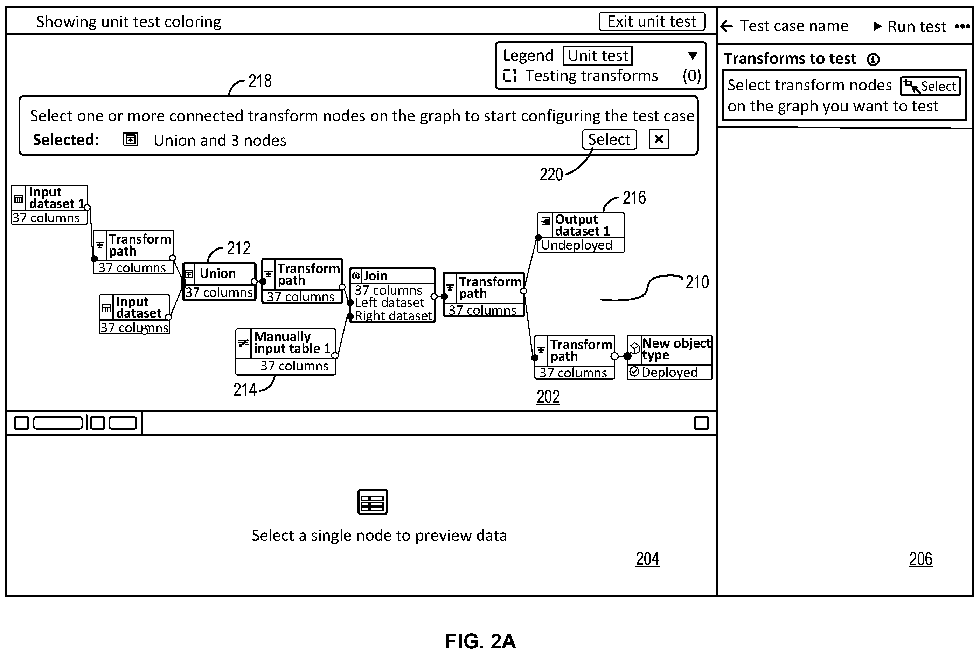

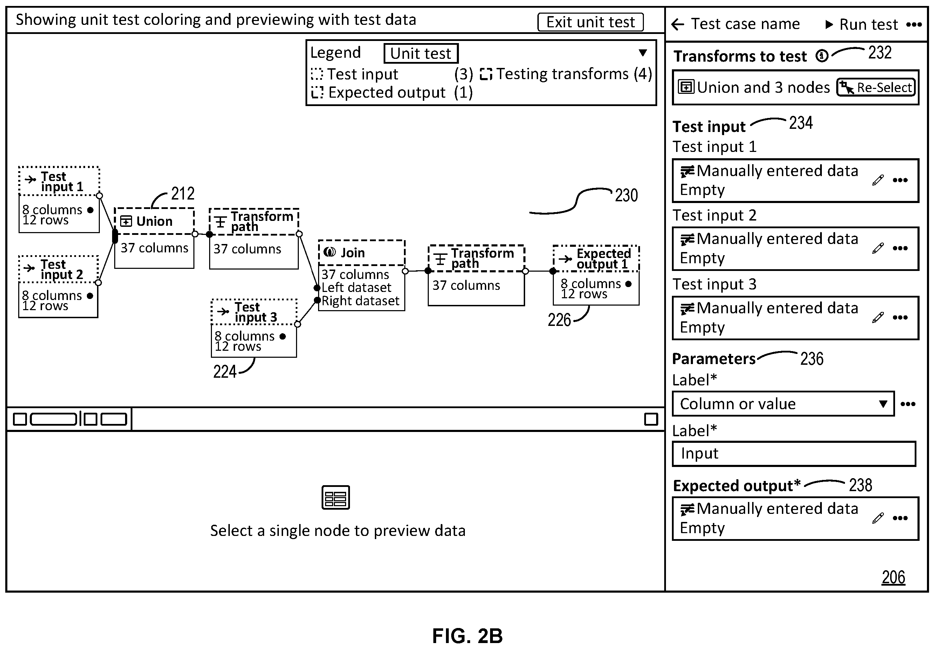

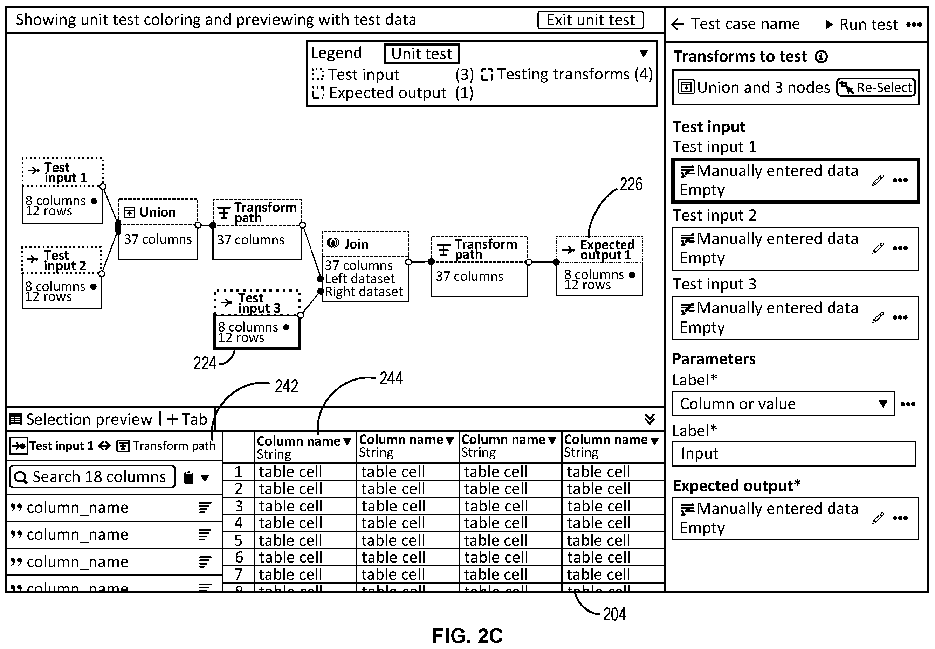

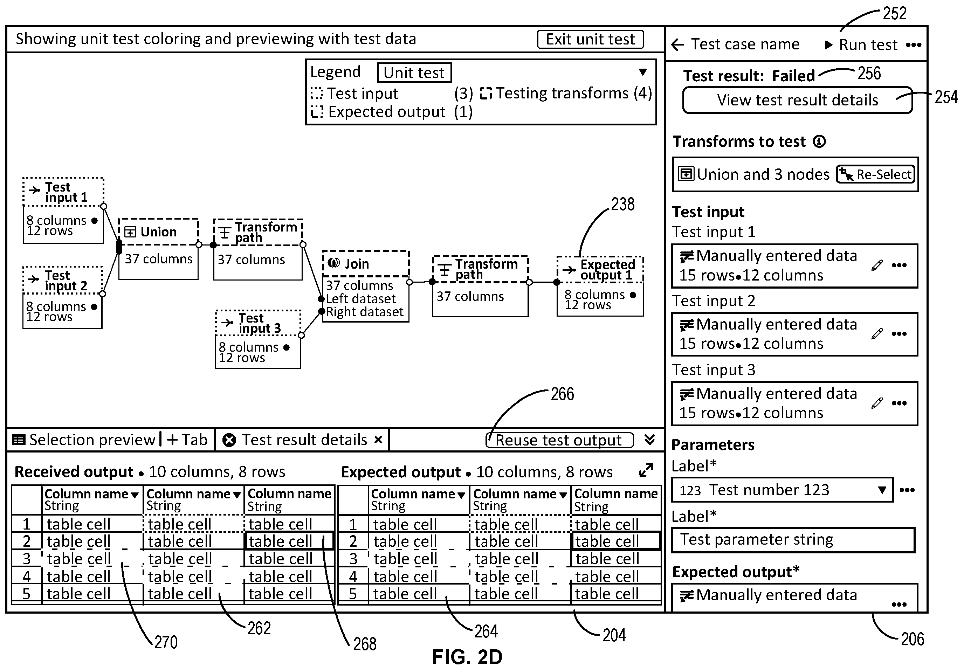

In some embodiments, the system 130 is programmed to cause presenting a GUI that also allows testing a data pipeline. FIGS. 2A, 2B, 2C, and 2D illustrate an example GUI that allows developing and executing tests for a data pipeline.

In some embodiments, as illustrated in FIG. 2A, the GUI includes in a screen, such as the three areas, 202, 204, and 206. The areas could be arranged in any way within the screen. Additional areas could be incorporated into the screen. Each of the areas can also be occupying the entire screen such that the other areas are nonexistent or hidden upon user request. Within each of the areas, the arrangement and appearance of graphical elements are shown for illustration only, and obvious substitutions can be made in the area. In this example, a graph 210 that represents a data pipeline is presented in the area 202. The graph 210 has nodes and edges, such as the node 212 that represents the union as a data transform, the node 214 that represents manually input table 1 as an input data variable, and the node 216 that represents output dataset 1 as an output data variable. The GUI can provide a prompt, such as the message 218, that instructs a user on developing a test for a target data pipeline, and in accordance with the prompt, allow a user to select a portion of the data pipeline being presented as the target data pipeline to be tested. The selection can be performed in various ways, such as clicking on all the nodes representing the data transforms to be included in the target data pipeline or drawing an outline that includes all those nodes. In this example, the target data pipeline includes the data transforms represented by those nodes with bold boundaries, and the area 202 can be refreshed upon a selection of the button 220, for example.

In some embodiments, as illustrated in FIG. 2B, a graph that includes the selected nodes and represents the target data pipeline, such as the graph 230, is now presented once the target data pipeline is defined. The system 130 can be programmed to determine which input variables and output variables are associated with the target data pipeline and insert noes that represent corresponding test inputs and expected outputs instead. Each test would be associated with a specific set of test inputs and expected outputs, which would initially be empty. The system 130 can also be programmed to verify various aspects of the graph representing the target data pipeline, such as whether the graph is fully connected or has at least one test input and one test output. The GUI can show different nodes in different appearances, such as different colors, shades, shapes, sizes, line widths, or shape fills, to help clarify different types of the nodes. For example, a node can be shown as corresponding to a data transform or a dataset, an input dataset or an output data, or a manually specified dataset or an existing, reusable dataset.

In this example, the graph 230 has four nodes, including the node 212 that represents the union as a data transform. The graph 230 also has the node 224 that represents test input 3 as a test input corresponding to manually input table 1 214, and the node 226 that represents expected output 1 as an expected output corresponding to output dataset 1 216. Different appearances are assigned to test inputs, data transforms, and expected outputs, as indicated by the legend. The GUI can also allow a user to create an expected output for any intermediate test output dataset, such as the one generated by the data transform represented by the node 212.

In some embodiments, once the target data pipeline is defined and presented, specific sets of fields related to the target data pipeline can be displayed on the screen, such as a first set of fields 232 for the data transforms, a second set of fields 234 for the test inputs, a third set of fields 236 for the global parameters that apply to the data pipeline as a whole and thus one or more target data pipelines, and a fourth set of fields 238 for the expected outputs in the area 206. The GUI can show the values already entered for the test inputs and expected outputs, as further discussed below, in the corresponding sets of fields, or allow overriding of those values via the sets of fields.

In some embodiments, as illustrated in FIG. 2C, in response to a selection of one of the nodes, such as the node 224 that represents test input 3 as a test input, the node can be highlighted, and a set of fields related to the corresponding input dataset can be presented in a separate area, such as the area 204. The GUI can allow a user to build the input dataset by searching for specific columns of existing datasets in one portion of the screen, such as the portion 242, and viewing or updating the selected columns and cell values in another portion of the screen, such as the portion 244, which includes the schema information for the input dataset in the column headers. Instead of searching for specific columns, the GUI can also allow a user to build the input dataset by directly specifying an existing dataset. For example, the GUI can allow a user to explore the graph in executing the data pipeline or a graph for executing another target data pipeline in a certain area of the screen or on another screen and point to a node that represents a dataset.

In some embodiments, when the selected node represents an expected output, such as the node 226, the GUI can allow a user to specify a set of assertions in the expected output for the corresponding test output. Each assertion specified in the expected output is to be applied to the corresponding test output generated from executing the test. The system 130 is programmed to allow an assertion to be specified at different levels, such as the column level, the row level, the cell level, or the dataset level, and it can apply any Boolean operator to any property of the relevant entity (e.g., row, column, cell, dataset). A cell of the expected output can include a constant value, in which the case the value of the corresponding cell of the test output is expected to be identical to that exact value. A cell of the expected output can include a range, in which case the value of the corresponding cell of the test output is expected to fall in that range. A cell of the expected output can include a test of whether a value is not empty, in which case the value of the corresponding cell of the test output is expected to be non-empty. A cell of the expected output can also be empty, in which case the value of the corresponding cell of the test output does not matter. Setting up the set of assertions is similar to adding a data transform to the target data pipeline that takes a test output of the target data pipeline as input dataset, evaluate the assertions, and generate an output dataset that indicates the evaluation results.

In some embodiments, the system 130 is programmed to allow an assertion to concern not only values of the test outputs but also metadata of the test outputs. A cell of the expected output can thus refer to metadata of the value of the corresponding cell of the test output. Such example assertions include that the relevant entity has a certain size, has a certain data type, or has a timestamp that is later than the timestamp of the previous entity. Specifically, the target data pipeline can operate on streaming data arriving over time instead of batch data that arrives at once, which lead to output data being generated over time. Therefore, an assertion can concern timing attributes of the test outputs, such as whether a creation timestamp of a current row is more than thirty minutes later than that of the previous row. The GUI can thus allow the specification or viewing of metadata, such as including a timestamp column in the portion 244 in FIG. 2C or in the portion 262 in FIG. 2D, as discussed next.

### 3.2. EXECUTING TESTS FOR DATA PIPELINES

In some embodiments, as illustrated in FIG. 2D, the GUI allows a user to execute a test via a first graphical option, such as the button 252 in the area 206, which once pushed would invoke the test. The execution would be based on the values of the sets of fields in the area 206. Executing a test is similar to executing the underlying target data pipeline on specified input datasets where output data of one data transform in the target data pipeline is automatically and immediately used as the input data of the next data transform in the target data pipeline. In this example, the test was already executed and resulted in a failure, as shown in the area 256. The GUI further allows a user to view the test result details via a second graphical option, such as the button 254 in the area 206. In response to the selection of this second graphical option, the GUI can show the test outputs or additionally the expected outputs in the area 204. In this example, the target data pipeline has one test output. Therefore, the test output can be shown in the portion 262, and the expected output can be shown in the portion 264. The GUI can highlight cells that are currently in focus, such as the cell 268 of the test output and the corresponding cell of the expected output. Furthermore, the GUI can enable easy identification of the cause of the failure and highlight cells of the test output or additionally the expected output where certain assertions evaluate to false. For instance, the cell 270 of the test output and the corresponding cell of the expected output are shown in a different appearance to indicate that the value of the cell 270 does not satisfy the associated assertion. The GUI can also provide graphical options to cycle through those cells. In response to the failed test, a user is then allowed to update the target data pipeline via the area 202 or another area or screen, the test inputs via the area 206 or another area or screen, the expected output via the area 204 or another area or screen, and rerun the test.

In some embodiments, for any data pipeline, the system 130 can be programmed to cause a display of the list of tests that apply to any part of the data pipeline. The GUI can allow a user to indicate that the data pipeline is ready for a production environment. In response to that, the GUI can then automatically execute the list of tests and show the list of execution results. By virtual of these features, the data pipeline is validated by these tests before be executed in a production environment.

In some embodiments, the GUI can allow the specification or viewing of metadata, such as including a timestamp column, as noted above. As a target data pipeline would be executed as usual without changes to the data transforms to accommodate the use of metadata in a test, the system 130 is programmed to map the metadata that looks like part of the datasets in the GUI to metadata in executing the test. For example, when the metadata includes timestamps, in executing the target data pipeline, the system 130 can be programmed to interpret the earliest timestamp in a timestamp column associated with each test input as the current time, make the test inputs available according to the timestamps specified for the test inputs, determine timestamps for the test outputs as the test outputs are generated, and cause a display of the timestamps in a timestamp column associated with each test output.

### 3.3. UPDATING TESTS FOR DATA PIPELINES

In some embodiments, when a target data pipeline is updated, the system 130 is programmed to automatically update an associated test. When the update affects the interface of the target data pipeline, namely the input data variable and output data variable, and thus the test, the system 130 is programmed to take actions. Specifically, when a data transform in the target data pipeline is updated such that an input data variable or output data variable is eliminated from the target data pipeline, the system 130 can be programmed to automatically remove the test input or expected output for the test output from the test and update the related features in the GUI. When a data transform is updated such that an input data variable or output data variable is introduced to the target data pipeline, the system 130 can be programmed to automatically present a notification in the GUI to solicit new test data for the new test input or new assertions for the new expected output. In addition, when a data transform is updated such that attributes of an input data variable change, such as the number of columns or the data type of a column, the system 130 can be programmed to automatically present a notification in the GUI to solicit new test data for the update of the test input.

In some embodiments, when execution of a test results in a failure, the system 130 is programmed to assist with identifying the cause of the failure, as discussed above, or otherwise remedy the failure. One reason why an assertion that a test output satisfies certain conditions evaluates to false is that a data transform in the target data pipeline did not work as expected, in which case showing how the test output differs from the expected output can guide a user to the source of errors. Another reason why an assertion that a test output satisfies certain conditions evaluates to false is that an assertion in the expected output is incorrect. In that case, the GUI can allow a user to update the assertion in the expected output of the test to be consistent with the test output via a graphical option. For example, the user could press the button 266, and the GUI can automatically set the assertion to being equal to the test output; the user can later update the assertion to being greater than or equal to the test output. When the test is run again, the assertion will evaluate to true. The GUI can also offer graphical options to allow a user to cycle through the changes made in the target data pipeline since the last time the test was run to help remedy the failure.

### 4. EXAMPLE PROCESSES

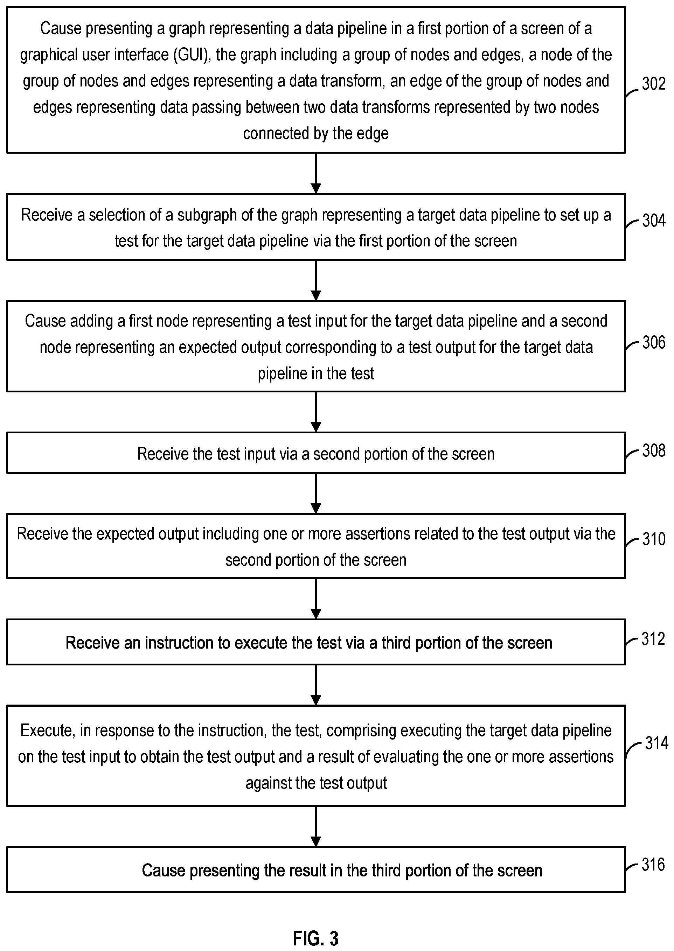

FIG. 3 illustrates a process of enabling testing a target data pipeline within a GUI in accordance with disclosed embodiments. FIG. 3 is shown in simplified, schematic format for purposes of illustrating a clear example and other embodiments may include more, fewer, or different elements connected in various manners. FIG. 3 is intended to disclose an algorithm, plan, or outline that can be used to implement one or more computer programs or other software elements which when executed cause performing the functional improvements and technical advances that are described herein. Furthermore, the flow diagrams herein are described at the same level of detail that persons of ordinary skill in the art ordinarily use to communicate with one another about algorithms, plans, or specifications forming a basis of software programs that they plan to code or implement using their accumulated skill and knowledge.

In step 302, the system 130 is programmed to cause presenting a graph representing a data pipeline in a first portion of a screen of a GUI. The graph includes a group of nodes and edges, a node of the group of nodes and edges represents a data transform, and an edge of the group of nodes and edges represents data passing between two data transforms represented by two nodes connected by the edge.

In step 304, the system 130 is programmed to receive a selection of a subgraph of the graph representing a target data pipeline to set up a test for the target data pipeline via the first portion of the screen. In some embodiments, the selection comprises an identification of one or more nodes in the graph that are also in the subgraph.

In step 306, the system 130 is programmed to cause adding a first node representing a test input for the target data pipeline and a second node representing an expected output corresponding to a test output for the target data pipeline in the test.

In some embodiments, a specific node in the subgraph representing data from an existing dataset has a first appearance, and a certain node in the subgraph representing newly input data has a second appearance different from the first appearance. In certain embodiments, the system 130 is programmed to cause presenting a first graphical option to upload a first dataset, a second graphical option to select columns of a second dataset, or a first table for building a third dataset in response to a selection of the first node or the second node. In other embodiments, the system 130 is programmed to cause displaying schema information for the test input in the second of the screen before receiving the test input.

In step 308, the system 130 is programmed to receive the test input via a second portion of the screen.

In step 310, the system 130 is programmed to receive the expected output including one or more assertions related to the test output via the second portion of the screen. In some embodiments, an assertion of the one or more assertions states that a portion of the test output falls in a range, is not empty, contains specific symbols, or has another alphanumerical property. In certain embodiments, an assertion of the one or more assertions refers to metadata of a portion of the test output, including a length, a data type, a timestamp, or another metadata property.

In some embodiments, the system 130 is programmed to cause presenting a list of global parameters that apply to the data pipeline in a third portion of the screen.

In step 312, the system 130 is programmed to receive an instruction to execute the test via the third portion of the screen.

In step 314, the system 130 is programmed to execute, in response to the instruction, the test, comprising executing the target data pipeline on the test input to obtain the test output and a result of evaluating the one or more assertions against the test output.

In step 316, the system 130 is programmed to cause presenting the result in the third portion of the screen.

In some embodiments, the result indicates a test failure. The system 130 is programmed to then receive a request to view test result details via the third portion of the screen, and cause a display of the test output in the second portion of the screen.

In certain embodiments, the system 130 is programmed to cause a display of the expected output together with the test output in the second portion of the screen, wherein a first value in the test output for which a first associated assertion evaluates to false is shown differently from a second value in the test output for which a second associated assertion evaluates to true.

In some embodiments, the system 130 is programmed to receive an update to the target data pipeline, including adding an input data variable to the target data pipeline. The system 130 is programmed to then automatically add a third node representing a second test input corresponding to the input data variable in the test. In certain embodiments, the system 130 is programmed to cause presenting a graphical option to update a first value in the expected output corresponding to a second value in the test output based on the second value in the test output. The system 130 is further configured to receive a selection of the graphical option, and update the first value in the expected output based on the second value in the test output.

### 5. EXAMPLE IMPLEMENTATION

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

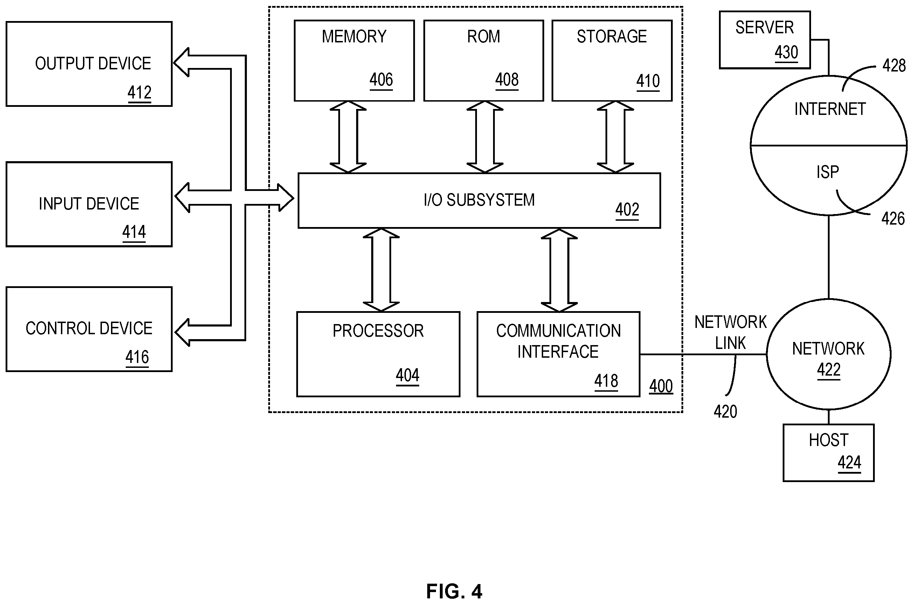

FIG. 4 illustrates an example computer system upon which various embodiments may be implemented. In the example of FIG. 4, a computer system 400 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 400 includes an input/output (I/O) subsystem 402 which may include a bus and/or other communication mechanism(s) for communicating information and/or instructions between the components of the computer system 400 over electronic signal paths. The I/O subsystem 402 may include an I/O controller, a memory controller and at least one I/O port. The electronic signal paths are represented schematically in the drawings, for example as lines, unidirectional arrows, or bidirectional arrows.

At least one hardware processor 404 is coupled to I/O subsystem 402 for processing information and instructions. Hardware processor 404 may include, for example, a general-purpose microprocessor or microcontroller and/or a special-purpose microprocessor such as an embedded system or a graphics processing unit (GPU) or a digital signal processor or Advanced RISC Machines (ARM) processor. Processor 404 may comprise an integrated arithmetic logic unit (ALU) or may be coupled to a separate ALU.

Computer system 400 includes one or more units of memory 406, such as a main memory, which is coupled to I/O subsystem 402 for electronically digitally storing data and instructions to be executed by processor 404. Memory 406 may include volatile memory such as various forms of random-access memory (RAM) or other dynamic storage device. Memory 406 also may be used for storing temporary variables or other intermediate information during execution of instructions to be executed by processor 404. Such instructions, when stored in non-transitory computer-readable storage media accessible to processor 404, can render computer system 400 into a special-purpose machine that is customized to perform the operations specified in the instructions.

Computer system 400 further includes non-volatile memory such as read only memory (ROM) 408 or other static storage device coupled to I/O subsystem 402 for storing information and instructions for processor 404. The ROM 408 may include various forms of programmable ROM (PROM) such as erasable PROM (EPROM) or electrically erasable PROM (EEPROM). A unit of persistent storage 410 may include various forms of non-volatile RAM (NVRAM), such as flash memory, or solid-state storage, magnetic disk, or optical disk such as CD-ROM or DVD-ROM, and may be coupled to I/O subsystem 402 for storing information and instructions. Storage 410 is an example of a non-transitory computer-readable medium that may be used to store instructions and data which when executed by the processor 404 cause performing computer-implemented methods to execute the techniques herein.

The instructions in memory 406, ROM 408 or storage 410 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement Transmission Control Protocol/Internet Protocol (TCP/IP), Hypertext Transfer Protocol (HTTP) or other communication protocols; file processing instructions to interpret and render files coded using HTML, XML, Joint Photographic Experts Group (JPEG), Moving Picture Experts Group (MPEG) or Portable Network Graphics (PNG); user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or NoSQL, an object store, a graph database, a flat file system or other data storage.

Computer system 400 may be coupled via I/O subsystem 402 to at least one output device 412. In one embodiment, output device 412 is a digital computer display. Examples of a display that may be used in various embodiments include a touch screen display or a light-emitting diode (LED) display or a liquid crystal display (LCD) or an e-paper display. Computer system 400 may include other type(s) of output devices 412, alternatively or in addition to a display device. Examples of other output devices 412 include printers, ticket printers, plotters, projectors, sound cards or video cards, speakers, buzzers or piezoelectric devices or other audible devices, lamps or LED or LCD indicators, haptic devices, actuators, or servos.

At least one input device 414 is coupled to I/O subsystem 402 for communicating signals, data, command selections or gestures to processor 404. Examples of input devices 414 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 416, which may perform cursor control or other automated control functions such as navigation in a graphical interface on a display screen, alternatively or in addition to input functions. Control device 416 may be a touchpad, a mouse, a trackball, or cursor direction keys for communicating direction information and command selections to processor 404 and for controlling cursor movement on the output device 412. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 414 may include a combination of multiple different input devices, such as a video camera and a depth sensor.

In another embodiment, computer system 400 may comprise an internet of things (IoT) device in which one or more of the output device 412, input device 414, and control device 416 are omitted. Or, in such an embodiment, the input device 414 may comprise one or more cameras, motion detectors, thermometers, microphones, seismic detectors, other sensors or detectors, measurement devices or encoders and the output device 412 may comprise a special-purpose display such as a single-line LED or LCD display, one or more indicators, a display panel, a meter, a valve, a solenoid, an actuator or a servo.

When computer system 400 is a mobile computing device, input device 414 may comprise a global positioning system (GPS) receiver coupled to a GPS module that is capable of triangulating to a plurality of GPS satellites, determining and generating geo-location or position data such as latitude-longitude values for a geophysical location of the computer system 400. Output device 412 may include hardware, software, firmware, and interfaces for generating position reporting packets, notifications, pulse or heartbeat signals, or other recurring data transmissions that specify a position of the computer system 400, alone or in combination with other application-specific data, directed toward host computer 424 or server 430.

Computer system 400 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 400 in response to processor 404 executing at least one sequence of at least one instruction contained in main memory 406. Such instructions may be read into main memory 406 from another storage medium, such as storage 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage 410. Volatile media includes dynamic memory, such as memory 406. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 402. Transmission media can also take the form of acoustic or light waves, such as those generated during radio-wave and infra-red data communications.

Various forms of media may be involved in carrying at least one sequence of at least one instruction to processor 404 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 400 can receive the data on the communication link and convert the data to be read by computer system 400. For instance, a receiver such as a radio frequency antenna or an infrared detector can receive the data carried in a wireless or optical signal and appropriate circuitry can provide the data to I/O subsystem 402 such as place the data on a bus. I/O subsystem 402 carries the data to memory 406, from which processor 404 retrieves and executes the instructions. The instructions received by memory 406 may optionally be stored on storage 410 either before or after execution by processor 404.

Computer system 400 also includes a communication interface 418 coupled to I/O subsystem 402. Communication interface 418 provides a two-way data communication coupling to network link(s) 420 that are directly or indirectly connected to at least one communication network, such as a network 422 or a public or private cloud on the Internet. For example, communication interface 418 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 422 broadly represents a LAN, WAN, campus network, internetwork, or any combination thereof. Communication interface 418 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 418 sends and receives electrical, electromagnetic, or optical signals over signal paths that carry digital data streams representing various types of information.

Network link 420 typically provides electrical, electromagnetic, or optical data communication directly or through at least one network to other data devices, using, for example, satellite, cellular, Wi-Fi, or BLUETOOTH technology. For example, network link 420 may provide a connection through a network 422 to a host computer 424.

Furthermore, network link 420 may provide a connection through network 422 or to other computing devices via internetworking devices and/or computers that are operated by an Internet Service Provider (ISP) 426. ISP 426 provides data communication services through a world-wide packet data communication network represented as internet 428. A server 430 may be coupled to internet 428. Server 430 broadly represents any computer, data center, virtual machine, or virtual computing instance with or without a hypervisor, or computer executing a containerized program system such as DOCKER or KUBERNETES. Server 430 may represent an electronic digital service that is implemented using more than one computer or instance and that is accessed and used by transmitting web services requests, Uniform Resource Locator (URL) strings with parameters in HTTP payloads, application programming interface (API) calls, app services calls, or other service calls. Computer system 400 and server 430 may form elements of a distributed computing system that includes other computers, a processing cluster, server farm or other organization of computers that cooperate to perform tasks or execute applications or services. Server 430 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to interpret or render files coded using HTML, XML, JPEG, MPEG or PNG; user interface instructions to render or interpret commands for a GUI, command-line interface or text user interface; application software such as an office suite, internet access applications, design and manufacturing applications, graphics applications, audio applications, software engineering applications, educational applications, games or miscellaneous applications. Server 430 may comprise a web application server that hosts a presentation layer, application layer and data storage layer such as a relational database system using SQL or NoSQL, an object store, a graph database, a flat file system or other data storage.

Computer system 400 can send messages and receive data and instructions, including program code, through the network(s), network link 420 and communication interface 418. In the Internet example, a server 430 might transmit a requested code for an application program through Internet 428, ISP 426, local network 422 and communication interface 418. The received code may be executed by processor 404 as it is received, and/or stored in storage 410, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 404. While each processor 404 or core of the processor executes a single task at a time, computer system 400 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

### 6. EXTENSIONS AND ALTERNATIVES

In the foregoing specification, embodiments of the disclosure have been described with reference to numerous specific details that may vary from implementation to implementation. The specification and drawings are, accordingly, to be regarded in an illustrative rather than a restrictive sense. The sole and exclusive indicator of the scope of the disclosure, and what is intended by the applicants to be the scope of the disclosure, is the literal and equivalent scope of the set of claims that issue from this application, in the specific form in which such claims issue, including any subsequent correction.

## Claims

1. A computer-implemented method, comprising:
causing (302) presenting a graph representing a data pipeline in a first portion of a screen of a graphical user interface (GUI),
the graph including a group of nodes and edges,
a node of the group of nodes and edges representing a data transform,
an edge of the group of nodes and edges representing data passing between two data transforms represented by two nodes connected by the edge;
receiving (304) a selection of a subgraph of the graph representing a target data pipeline to set up a test for the target data pipeline via the first portion of the screen;
causing (306) adding a first node representing a test input for the target data pipeline and a second node representing an expected output corresponding to a test output for the target data pipeline in the test;
receiving (308) the test input via a second portion of the screen;
receiving (310) the expected output including one or more assertions related to the test output via the second portion of the screen;
receiving (312) an instruction to execute the test via a third portion of the screen;
executing (314), in response to the instruction, the test, comprising executing the target data pipeline on the test input to obtain the test output and a result of evaluating the one or more assertions against the test output;
causing (316) presenting the result in the third portion of the screen,
wherein the method is performed by one or more processors.

2. The computer-implemented method of claim 1, the selection comprising an identification of one or more nodes in the graph that are also in the subgraph.

3. The computer-implemented method of claim 1 or claim 2, further comprising causing presenting a first graphical option to upload a first dataset, a second graphical option to select columns of a second dataset, or a first table for building a third dataset in response to a selection of the first node or the second node.

4. The computer-implemented method of any preceding claim, further comprising causing presenting a list of global parameters that apply to the data pipeline in the third portion of the screen.

5. The computer-implemented method of any preceding claim,
a specific node in the subgraph representing data from an existing dataset having a first appearance,
a certain node in the subgraph representing newly input data having a second appearance different from the first appearance.

6. The computer-implemented method of any preceding claim, further comprising causing displaying schema information for the test input in the second of the screen before receiving the test input.

7. The computer-implemented method of any preceding claim, an assertion of the one or more assertions stating that a portion of the test output falls in a range, is not empty, contains specific symbols, or has another alphanumerical property.

8. The computer-implemented method of any preceding claim, an assertion of the one or more assertions referring to metadata of a portion of the test output, including a length, a data type, a timestamp, or another metadata property.

9. The computer-implemented method of any preceding claim, the result indicating a test failure, further comprising:
receiving a request to view test result details via the third portion of the screen;
causing a display of the test output in the second portion of the screen.

10. The computer-implemented method of claim 9, further comprising:
causing a display of the expected output together with the test output in the second portion of the screen,
wherein a first value in the test output for which a first associated assertion evaluates to false is shown differently from a second value in the test output for which a second associated assertion evaluates to true.

11. The computer-implemented method of any preceding claim, further comprising:
causing presenting a graphical option to update a first value in the expected output corresponding to a second value in the test output based on the second value in the test output;
receiving a selection of the graphical option;
updating the first value in the expected output based on the second value in the test output.

12. The computer-implemented method of any preceding claim, further comprising:
receiving an update to the target data pipeline, including adding an input data variable to the target data pipeline;
automatically adding a third node representing a second test input corresponding to the input data variable in the test.

13. A system (400) for enabling testing a target data pipeline within a GUI, comprising:
a memory;
one or more processors (404) coupled with the memory and configured to perform the method of any one of the preceding claims.

14. A non-transitory, computer-readable storage medium storing one or more sequences of instructions which when executed cause one or more processors to perform the method of any one of claims 1 to 12.
